# EUROPÄISCHE PATENTSCHRIFT

(11) **EP 2 386 836 B1**
(45) Veröffentlichungstag und Bekanntmachung des Hinweises auf die Patenterteilung: **06.01.2016**
(21) Anmeldenummer: 11003645.6
(22) Anmeldetag: 04.05.2011
(51) Int. Cl.: G01F 1/66

(54) **Gehäuseanordnung für Ultraschall-Durchflussmesser sowie Ultraschall-Durchflussmesser**
Casing assembly for ultrasound flow meter and ultrasound flow meter
Agencement de boîtier pour débitmètre à ultrasons et débitmètre à ultrasons

(30) Priorität: 12.05.2010 DE 102010020338
(43) Veröffentlichungstag der Anmeldung: 16.11.2011
(73) Patentinhaber: Diehl Metering GmbH, 91522 Ansbach (DE)
(72) Erfinder: Kroemer, Harald, 91522 Ansbach (DE); Öfelein, Wilhelm, 91522 Ansbach (DE)
(74) Vertreter: Diehl Patentabteilung

(56) Entgegenhaltungen:
- EP-A1- 0 260 335
- EP-A1- 0 477 418
- EP-A1- 0 532 971
- EP-A1- 0 890 826
- EP-A1- 2 236 994
- EP-A1- 2 306 160
- DE-A1- 19 549 162
- DE-A1-102004 010 408
- DE-A1-102005 007 241
- DE-A1-102007 011 547
- DE-U1- 29 611 678
- GB-A- 2 101 318

## Beschreibung

Die vorliegende Erfindung betrifft einen Ultraschall-Durchflussmesser mit einer Gehäuseanordnung und einem Messeinsatz.

### Technologischer Hintergrund

Die Abdichtung und Kontaktierung von Ultraschall-Durchflussmessern ist ein technisch anspruchsvoller und aufwändiger Prozess. Gehäuseöffnungen müssen mit filigranen Dichtungselementen aus bestem Dichtmaterial abgedichtet werden. Durch den vermehrten Einsatz von Kunststoffmaterialien, bei denen üblicherweise Fertigungstoleranzen nicht ausgeschlossen werden können, kann es aufgrund der kleinen Dimensionen der Dichtungselemente leicht zu Undichtigkeiten bei bestimmten Betriebsbedingungen kommen. Auch bei der Auswahl von hoch qualitativem Dichtmaterial und zeitaufwändigen manuellen Bearbeitungen können Undichtigkeiten dennoch nicht ausgeschlossen werden.

### Stand der Technik

Aus der EP 0 708 313 ist ein entsprechendes Ultraschall-Durchflussmessgerät bekannt, bei dem im üblicherweise aus Guss bestehenden Gehäuse desselben Ultraschallwandler unter Zuhilfenahme einer zugehörigen Überwurfmutter sowie eines O-Rings in jedem einzelnen Ultraschallwandler zugeordnete Öffnungen eingesetzt werden. Ein Temperaturfühler ist ebenfalls in einer zugehörigen Gehäuseöffnung untergebracht. Diese Konstruktion begründet eine Vielzahl von Einzelteilen. Darüber hinaus erfordert sie eine aufwändige Verarbeitung des Gehäuses.

Aus der EP 2 037 231 A1 ist ein Gehäuse für einen Ultraschall-Durchflussmesser bekannt, bei dem ein einstückiges, monolitisches Gehäuse mit an der Außenseite angeordneten, planen Kontaktstellen für die Positionierung von Ultraschallwandlern eingesetzt wird. Die Ultraschallwandler werden in einem bestimmten Abstand entlang des Gehäuses an dessen Außenseite befestigt.

Aus der DE 10 2005 001 895 B4 ist eine Vorrichtung zur Durchflussmessung bekannt, bei der der Fluidstrom um eine senkrecht zur Strömungsrichtung positionierte Strömungstrennwand herum geleitet wird. An der Stirnseite der Strömungstrennwand befindet sich eine Ultraschallwandleranordnung in einer Gehäuseaussparung. Die Ultraschallwandleranordnung umfasst lediglich einen Piezoschwinger mit einer einzigen Masseelektrode sowie zwei flächig nebeneinander angeordnete und voneinander getrennte Signalelektroden, wobei jeder Signalelektrode eine Abstrahlfläche bzw. Empfangsfläche für Ultraschallsignale zugeordnet ist.

Aus der EP 0 890 826 B1 ist ein Ultraschall-Durchflussmesser mit einem Messeinsatz aus Kunststoff bekannt. Der Messeinsatz befindet sich in einer Ausnehmung des Gehäuses des Durchflussmessers und ist zu diesem einlaufseitig über eine einzige Dichtung abgedichtet. Zusätzlich verfügt der Messeinsatz über einen Deckel, der zum Messeinsatz über eine umlaufende Dichtung abgedichtet ist. In dem Deckel befinden sich zwei Durchbrüche, in die ebenfalls unter Einfügung einer Dichtung je ein einen Ultraschallwandlerkörper sowie ein zugehöriges Gehäuse umfassender Ultraschallwandler eingesetzt wird.

Die GB 2 101 318 A beschreibt einen Ultraschall-Durchflussmesser, bei dem die Ultraschallwandler in einem oder mehreren Einschüben in das Zählergehäuse angeordnet sind, wobei der oder die Einschübe gegenüber dem Gehäuse mit einem oder mehreren Dichtungen abgedichtet sind.

Die DE 10 2007 011 547 A1 offenbart eine Fluidzählanordnung mit einem Rohrabschnitt als Gehäuse, in welchem Öffnungen zur Einstrahlung der Ultraschallsignale von Ultraschallwandlern vorgesehen sind, welche diese Öffnungen verschließen. Durch die Öffnungen ragt jeweils ein Tragelement mit einem Ultraschallreflektor in das Innere des Gehäuses hinein. Für jede der Öffnungen ist eine eigene Abdichtung erforderlich.

In der EP 2 306 160 A1 ist ein Einsatz für einen Großwasserzähler beschrieben, welcher aus einem Messeinsatz mit Umlenkspiegeln und Messstrecke sowie einem gegenüber dem Zählergehäuse abgedichteten und die Ultraschallwandler beinhaltenden Gehäuseeinsatz besteht und durch eine seitliche Öffnung im Zählergehäuse in zur Strömungsrichtung senkrechter Richtung einsetzbar ist.

DE 10 2005 007 241 A1 und DE 10 2004 010 408 A1 offenbaren Ultraschall-Durchflussmesser umfassend eine Gehäuseanordnung mit einem einteiligen Gehäuse und einem stirnseitig in das Gehäuse eingesetzten, die Messstrecke und Umlenkeinrichtungen umfassenden Messeinsatz.

### Aufgabe

Die Aufgabe der vorliegenden Erfindung besteht darin, einen neuartigen Ultraschall-Durchflussmesser der gattungsgemäßen Art zur Verfügung zu stellen, der eine Reduzierung der Produktionskosten ermöglicht.

### Gegenstand der Erfindung

Die vorstehende Aufgabe wird durch die Merkmale des Anspruchs 1 gelöst. Zweckmäßige Ausgestaltungen der vorliegenden Erfindung ergeben sich aus den Unteransprüchen sowie der Beschreibung.

Aufgrund des mindestens zwei voneinander getrennt positionierten Ultraschallwandlerkörper aufnehmenden, bodenseitig geschlossenen, topfförmigen Gehäuseeinsatzes kann in vorteilhafter Weise lediglich ein einziges gemeinsames Dichtungselement zur Abdichtung eingesetzt werden. In Anbetracht dessen muss lediglich der Gehäuseeinsatz mit seinem Dichtungselement auf die Gehäuseöffnung abgestimmt werden. Dies führt zu einer drastischen Reduzierung der benötigten Bauteile sowie Bearbeitungsschritte. Darüber hinaus wird die Bearbeitung des üblicherweise aus Guss bestehenden Gehäuses sehr viel einfacher und damit auch die Anforderung an die Genauigkeit der Einbauposition geringer. Dies wiederum ermöglicht den Einsatz einer Pulverbeschichtung. Wegen der Abdichtung des Gehäuseeinsatzes zum Gehäuse kann ein großvolumiges Dichtungselement eingesetzt werden, bei dem Produktionsschwankungen des Dichtungselements bzw. Bearbeitungstoleranzen beim Gehäuse nicht so stark ins Gewicht fallen. Das Einbringen einer einzigen länglichen Öffnung in das Gehäuse vereinfacht die Bearbeitung desselben. Die erfinderische Idee ermöglicht es zudem, den Gehäuseeinsatz als Modul einzusetzen, d.h. einen standardisierten Gehäuseeinsatz für eine Mehrzahl von Durchflussmesser-Typen, beispielsweise solchen mit unterschiedlichem Nenndurchmesser, vorzusehen. Hierdurch können zusätzlich Herstellungskosten in erheblichem Masse eingespart werden.

Die Erfindung sieht vor, dass bei einem als einstückiges Rohr ausgebildeten Gehäuse ein Messeinsatz, der die Messstrecke, Umlenkeinrichtungen sowie gegebenenfalls Strömungsleiteinrichtungen umfasst, von der Stirnseite her in das Gehäuse einsetzbar ist. Durch den Gehäuseeinsatz kann der Messeinsatz hierbei in seiner Position in einfacher Weise arretiert werden.

Zweckmäßigerweise liegt der jeweilige Ultraschallkörper auf einer geschlossenen Auflagefläche im Inneren des Gehäuseeinsatzes auf, mit der Folge, dass eine Durchschallung der geschlossenen Wand des Gehäuseeinsatzes erfolgt. Dies ermöglicht mangels Abdichtmaßnahmen eine besonders einfache Montage des Ultraschallwandlerkörpers im Gehäuseeinsatz und reduziert den Bearbeitungsaufwand.

Zweckmäßigerweise kann der Gehäuseeinsatz zusätzlich über Zentriermittel verfügen. Diese ermöglichen insbesondere eine sehr präzise Positionierung des Messeinsatzes innerhalb des Gehäuses relativ zum Gehäuseeinsatz, der die Ultraschallwandlerkörper trägt. Letztere müssen zum Messeinsatz exakt positioniert sein.

Dadurch, dass als Dichtungselement lediglich ein entlang des Umfangs des Gehäuseeinsatzes umlaufender Dichtungskörper, insbesondere ein O-Ring, vorgesehen ist, der im Vergleich zur Abdichtung eines einzelnen Ultraschallwandlerkörpers wesentlich voluminöser ist, können Toleranzunterschiede, sowohl was das Gehäuse als auch den Gehäuseeinsatz anbelangt, leicht ausgeglichen werden.

Bei einer zweckmäßigen Ausgestaltung besitzt der Gehäuseeinsatz eine zur Innenseite des Gehäuses hin ausgebildete, gekrümmte Fläche, die die Kontur des Messeinsatzes aufnimmt.

Bei einer alternativen Ausgestaltung ist die Innenseite des Gehäuseeinsatzes nicht an die Außenkontur des Messeinsatzes angepasst. Hierbei weist das Gehäuse des Ultraschalldurchflußmessers selbst im Bereich der Gehäuseöffnung eine gewölbte Gehäuseinnenwand auf, die lediglich im jeweiligen Durchschallungsbereich durchbrochen ist. Der Gehäuseeinsatz ist in diesem Fall nicht an die Gehäuseinnengeometrie angepasst. Er kann daher bei Ultraschalldurchflussmessern mit unterschiedlichen Gehäusegeometrien nach Art eines Moduls eingesetzt werden.

Zweckmäßigerweise ist an der Oberseite des Gehäuseeinsatzes ein Deckel vorgesehen. Als Deckel kann insbesondere eine Platine eingesetzt werden, mittels der die elektrische Ankoppelung an die Ultraschallwandlerkörper in konstruktiv einfacher Weise erfolgen kann.

In vorteilhafter Weise kann eine Kontaktierung der Ultraschallwandlerkörper mittels Kontaktfedern erfolgen, wobei beispielsweise die eine Kontaktfeder die eine Elektrode und die weitere Kontaktfeder die andere Elektrode am Ultraschallwandlerkörper kontaktiert.

Zwischen dem Deckel bzw. der Platine und dem Boden des Gehäuseeinsatzes befindet sich vorzugsweise Vergussmasse, so dass der verbleibende Innenraum des Gehäuseeinsatzes gegen die Bildung von Kondenswasser geschützt ist. Der Gehäuseeinsatz kann hierdurch in vorteilhafter Weise auch bei Kaltwasserzählern bzw. Kältezählern problemlos eingesetzt werden.

Der Gehäuseeinsatz ermöglicht es zudem, in einfacher Weise einen Temperaturfühler unterzubringen, da das Gehäuse selbst keine Bohrung für den Temperaturfühler mehr aufweisen muss.

Vorzugsweise wird der Gehäuseeinsatz derart ausgestaltet, dass der Temperaturfühler innerhalb des Gehäuseeinsatzes durch die Wandung des Gehäuseeinsatzes hindurch die Temperatur des den Ultraschalldurchflussmesser durchströmenden Fluids erfasst. Hierdurch kann auf eine Abdichtung des Temperaturfühlers verzichtet werden.

Vorteilhaft kann der Temperaturfühler direkt an der Platine bewegungsfest befestigt sein.

Die Innenseite des Gehäuseeinsatzes kann zweckmäßigerweise vor allem im Bereich der Positionen der Ultraschallwandlerkörper mit einer elektrisch leitenden Beschichtung versehen sein, die die einfache Herstellung eines Massekontakts ermöglicht.

Alternativ bietet die erfindüngsgemäße Konstruktion auch die Möglichkeit, die Kontaktierung der Ultraschallwandlerkörper über eine flächige Elektrode, die sich zwischen dem jeweiligen Ultraschallwandlerkörper und dem Gehäuseeinsatz befindet, zu verwirklichen.

### Ausführungsbeispiele der Erfindung

Nachstehend werden anhand von Zeichnungsfiguren zweckmäßige Ausgestaltungen der vorliegenden Erfindung näher erläutert. Hierbei werden der Übersichtlichkeit halber wiederkehrende Merkmale lediglich einmal mit einem Bezugszeichen versehen. Als erfindungswesentlich werden ausdrücklich auch Einzelmerkmalskombinationen bzw. Teilmerkmalskombinationen der nachstehend beschriebenen Ausgestaltungen angesehen.

Es zeigen:
- Fig. 1: eine erste Ausgestaltung eines Ultraschalldurchflussmessers mit einer Gehäuseanordnung gemäß der vorliegenden Erfindung in perspektivischer Schnittdarstellung;
- Fig. 2: eine vergrößerte Schnittdarstellung des Bereichs A von Fig. 1;
- Fig. 3: eine Explosionsdarstellung der Einzelteile des Gehäuseeinsatzes gemäß der Ausgestaltung nach Fig. 1 bzw. Fig. 2 in perspektivischer Schnittdarstellung;
- Fig. 4: eine Stirnansicht des Gehäuseeinsatzes gemäß der Ausgestaltung nach den Figuren 1 bis 3;
- Fig. 5: eine zweite Ausgestaltung eines Ultraschalldurchflussmessers mit einer Gehäuseanordnung gemäß der vorliegenden Erfindung in perspektivischer Schnittdarstellung;
- Fig. 6: eine vergrößerte Schnittdarstellung des Bereichs A von Fig. 5;
- Fig. 7: eine Explosionsdarstellung der Einzelteile des Gehäuseeinsatzes gemäß der Ausgestaltung nach Fig. 5 bzw. Fig. 6 in perspektivischer Schnittdarstellung sowie
- Fig. 8: eine Explosionsdarstellung der Einzelteile des Gehäuseeinsatzes gemäß einer weiteren Ausgestaltung der vorliegenden Erfindung.

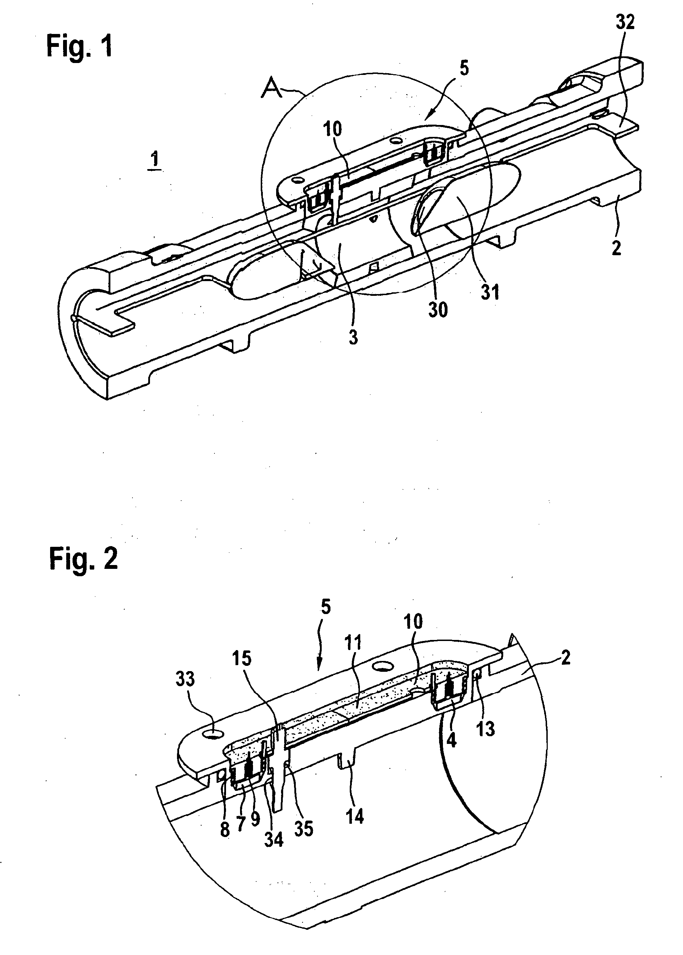

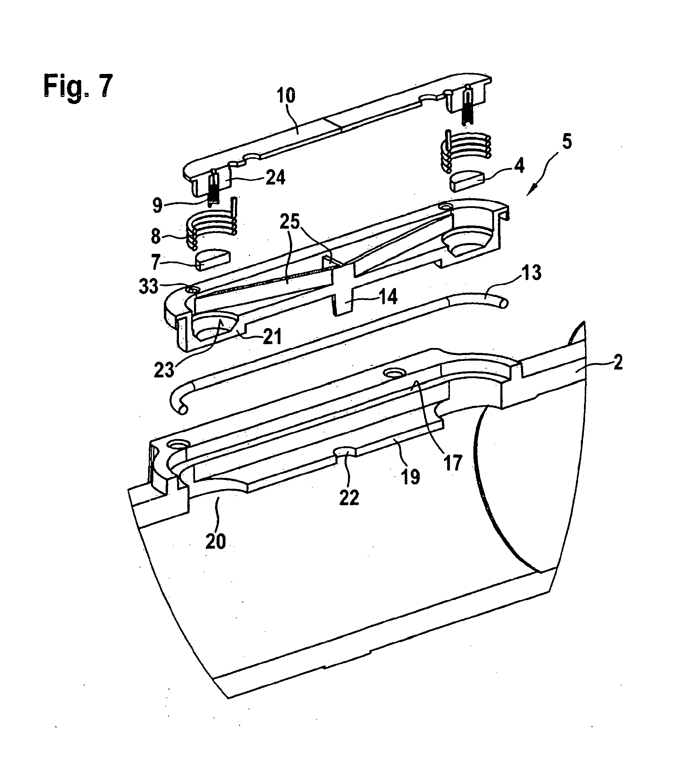

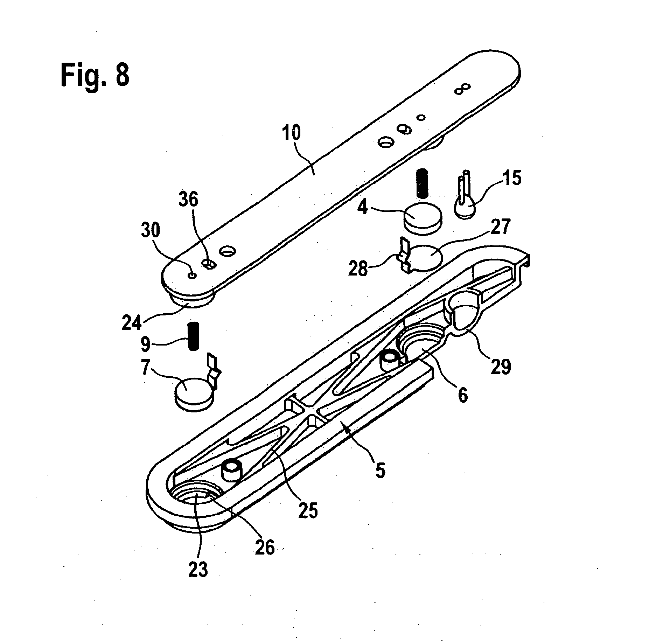

Bei den vorstehend wiedergegebenen Figuren 1 bis 7 handelt es sich um Längsschnitte. Bei Fig. 8 handelt es sich um einen Teillängsschnitt.

Bezugsziffer 1 in Fig. 1 bezeichnet einen Ultraschalldurchflussmesser, welcher in eine (nicht dargestellte) Fluidleitung, z.B. Warmwasserleitung und/oder Kaltwasserleitung zur Erfassung der Durchflussmenge an Fluid ortsfest installiert wird. Der Ultraschalldurchflussmesser 1 weist hierzu ein längliches rohrförmiges Gehäuse 2 auf, welches üblicherweise aus Metallguss besteht. Über geeignete (nicht dargestellte) Verbindungsmittel an den Stirnseiten des Gehäuses wird dieses mit dem Fluidleitungsnetz verbunden.

Der Ultraschalldurchflussmesser 1 verfügt über einen im Inneren des Gehäuses 2 befindlichen Messeinsatz 3, welcher bei der in Fig. 1 konkret dargestellten Ausführungsform einen ringförmigen, den Querschnitt verringernden Messabschnitt aufweist, der sich entlang des zwischen den beiden Umlenkspiegeln 30 befindlichen Raums erstreckt. Die Umlenkspiegel 30 werden von stromlinienförmig ausgebildeten Umlenkspiegelhaltern 31 getragen, die wiederum von einem Rahmen 32 gehalten werden, der gleichzeitig als Strömungsteiler dient.

Der Messeinsatz 3 wird zusammen mit den vorher bezeichneten Bestandteilen stirnseitig in das Gehäuse 2 des Ultraschalldurchflussmessers 1 eingeschoben.

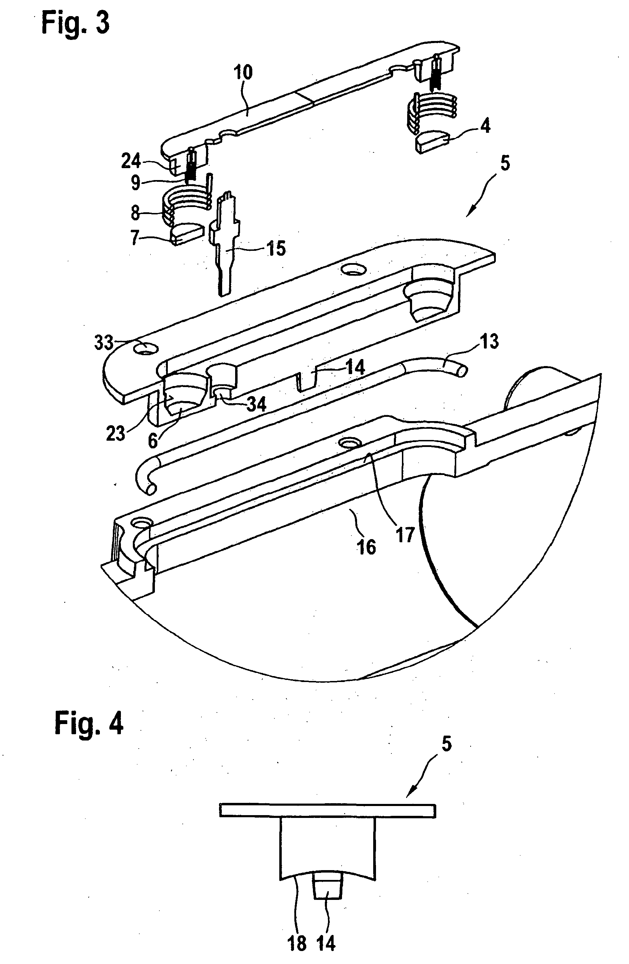

An der Oberseite des Gehäuses 2 (vergleiche hierzu auch Fig. 3) befindet sich eine längliche Gehäuseöffnung 16, die dazu vorgesehen ist, einen Gehäuseeinsatz 5 aufzunehmen. Der Gehäuseeinsatz 5 dient dazu, die Ultraschallwandlerkörper 4, 7 am Ultraschalldurchflussmesser 1 zu positionieren. Bei den Ultraschallwandlerkörpern 4, 7 handelt es sich üblicherweise um Piezokeramikscheiben, die elektrische Energie in akustische Energie und umgekehrt umwandeln.

Der Gehäuseeinsatz umfasst des Weiteren einen Temperaturfühler 15, welcher durch eine Bohrung 34 im Bodenbereich des Gehäuseeinsatzes 5 hindurch sich in das Innere des Gehäuses 2 des Ultraschalldurchflussmessers 1 erstreckt und zum Gehäuseeinsatz 5 hin mittels eines Dichtungselements 35 abgedichtet ist.

Zur Abdichtung des Gehäuseeinsatzes 5 zum Gehäuse 2 ist, vergleiche Fig. 3, ein einziges Dichtungselement 13 in Form eines in einer Stufe 17 umlaufenden, vergleichsweise groß dimensionierten O-Rings vorgesehen.

Der jeweilige Ultraschallwandlerkörper 4, 7 d. h. das jeweilige Piezokeramikplättchen befindet sich an der Oberseite einer Auflagefläche 6 an der Innenwand des topfförmigen Gehäuseeinsatzes 5. Diese ist vorzugsweise an den Durchmesser des Ultraschallwandlerkörper 4, 7 angepasst. Die Kontaktierung der (in den Zeichnungsfiguren nicht dargestellten) deckelseitigen Kontaktelektrode erfolgt über eine erste mittig angeordnete, in einem Halteteil 24 geführten Feder 9, die in zweckmäßiger Weise zum Abgriff des elektrischen Signals bzw. zur elektrischen Ansteuerung dient. Die Kontaktierung der ebenfalls in den Figuren nicht dargestellten zweiten Kontaktelektrode erfolgt über eine zweite spiralartige Feder 8, die den Massekontakt herstellt. Anstelle der zweiten Kontaktelektrode kann auch eine metallische Beschichtung der Innenwand des Gehäuseeinsatzes vorgesehen sein. Zur vereinfachten Montage ist oberhalb der Auflagefläche 6 eine abgeschrägte Fläche 23 vorgesehen, die durch Zentrierung das Einbringen und Positionieren des jeweiligen Ultraschallwandlerkörpers 4, 7 auf der Auflagefläche 6 erleichtert.

An der Oberseite des Gehäuseeinsatzes 5 befindet sich ein Deckel in Form einer Platine 10mit nicht dargestellten Kontaktbahnen, die eine unmittelbare Kontaktierung der Feder 8 sowie Feder 9 erlaubt.

Wie aus Fig. 2 ersichtlich ist, wird der verbleibende Innenraum des Gehäuseeinsatzes 5 mit einer Vergussmasse 11 ausgefüllt, so dass sich die Ultraschallwandlerkörper 4, 7 sowie die Federn 8, 9 in Kontakt mit der Vergussmasse 11 befinden und die Bildung von Kondenswasser vermieden wird.

Anstelle der Platine 10 kann auch ein Deckel in Form eines Kunststoff-Spritzgussteils für einen oberen Abschluss des Gehäuseeinsatzes 5 vorgesehen sein.

Der Gehäuseeinsatz 5 wird mittels (nicht dargestellten) Schrauben sowie gegebenenfalls (ebenfalls nicht dargestellten) Halteteilen mit dem Gehäuse druckfest und wasserdicht verschraubt.

Ein am Bodenbereich vorspringender Zapfen 14 dient dazu, über eine korrespondierende (in den Figuren nicht dargestellte) Ausnehmung am Messeinsatz 3 letzteren im zusammengebauten Zustand in seiner Position zu fixieren.

Wie aus Fig. 4 ersichtlich ist, ist die Unterseite des Gehäuseeinsatzes 5 mit einer nach innen gewölbten Fläche 18 versehen, die im montierten Zustand des Gehäuseeinsatzes 5 mit der Außenfläche des Messeinsatzes 3 kontaktiert.

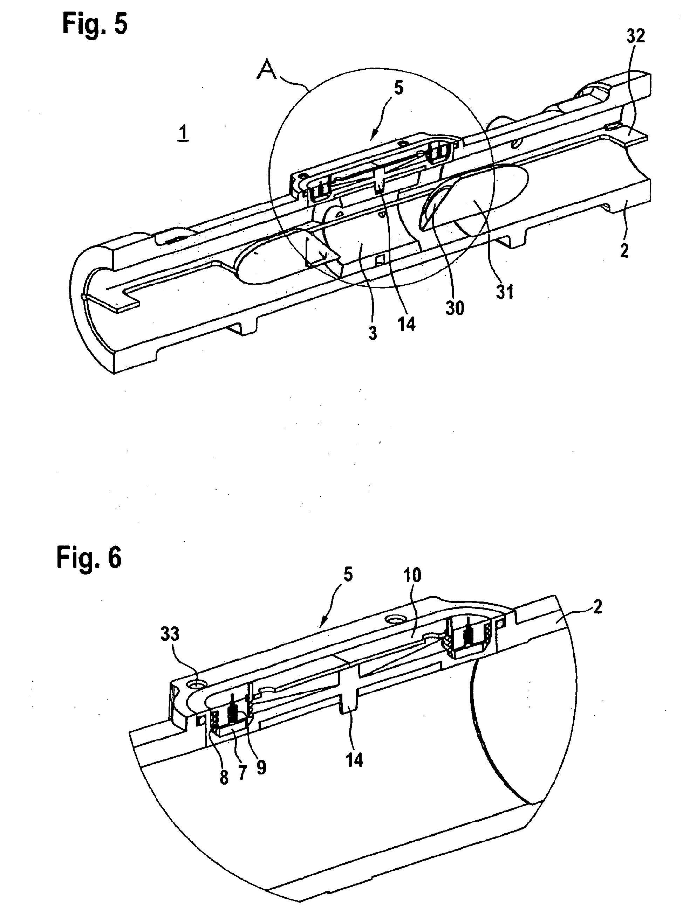

Bei der in den Figuren 5 bis 7 dargestellten Ausführungsvariante ist die Unterseite des Gehäuseeinsatzes 5 nicht an die Kontur des Messeinsatzes 3 angepasst. Das Gehäuse 2 weist eine Gehäuseinnenwand 19 auf, welche eine an die Außenkontur des Messeinsatzes 3 angepasste Innenkontur besitzt. Die Unterseite des Gehäuseeinsatzes 5 kann hierbei plan gestaltet sein. Die Gehäuseinnenwand 19 wird beim Ausfräsen der Gehäuseöffnung stehen gelassen, und zwar so, dass eine minimale Wandstärke, beispielsweise ca. 0,8 mm bis 1,2 mm auf der Mittellinie erhalten bleibt.

Der Messeinsatz 3 steht über entsprechende Dome 21, die in Durchtrittsöffnungen 20 in der Gehäuseinnenwand 19 eingreifen, mit dem Inneren des Ultraschalldurchflusszählers 1 in Kontakt. Die Dome 21 sind vorzugsweise so geformt, dass sie die Öffnungen 20 möglichst ausfüllen, um das Festsetzen von Luftblasen zu verhindern. Bei dieser Ausgestaltung kann der Gehäuseeinsatz 5 nach Art eines Moduls für unterschiedlichste Nenndurchmesser eingesetzt werden.

Die Kontaktierung der Ultraschallwandlerkörper entspricht derjenigen gemäß den Figuren 1 bis 3.

Um eine ausreichende Druckstabilität des Gehäuseeinsatzes zu gewährleisten, ist es zweckmäßig, diesen aus einem hochfesten, vorzugsweise mit einem Zusatzmaterial (z.B. Glasfasern) armierten Material (z.B. Kunststoff) herzustellen.

Darüber hinaus ist es zweckmäßig, konstruktive Maßnahmen zur Erhöhung der Steifigkeit zu treffen, beispielsweise Versteifungsrippen 25 der beispielhaften Ausgestaltung gemäß den Figuren 5 bis 7. Solche verstärkenden Maßnahmen sind von Bedeutung, da der gesamte Druck des Fluids auf der Wandung des Gehäuseeinsatzes 5 lastet.

Alternativ oder zusätzlich kann der Gehäuseeinsatz 5 mit einer notwendigen Materialstärke versehen sein.

Im Bereich der Ultraschallwandlerkörper 4 bzw. 7 bzw. der Auflageflächen 6 sollte der Gehäuseeinsatz 5 eine nur geringfügige Wandungsdicke aufweisen, die eine ausreichende Durchschallung ermöglicht.

Der jeweilige Gehäuseeinsatz 5 kann zudem zur elektrischen Kontaktierung der Ultraschallwandlerkörper 4, 7 mit einer metallischen Beschichtung im Bereich der Auflagefläche 6 versehen sein.

Die akustische Ankopplung der jeweiligen Piezokeramikscheibe an die Wand des Gehäuseeinsatzes 5 erfolgt zweckmäßigerweise mit einer geeigneten Schallleitpaste, beispielsweise aus Silikon oder PFPE. Alternativ kann der Ultraschallwandlerkörper 4, 7 auch eingeklebt sein oder eine Kontaktierung durch Lötung an einer Kontaktschicht des Gehäuseeinsatzes 5 erfolgen. Hierdurch ergibt sich insbesondere eine starre, gut elektrisch leitfähige Verbindung. Die weitere elektrische Kontaktierung auf der Oberseite der Piezokeramikscheibe kann durch die vorzugsweise fest mit der Platine 10 verbundene bzw. mit letzterer verlötete Feder 9, die mit einer definierten Kraft Piezokeramikscheibe gegen die membranartige Wand des Gehäuseeinsatzes 5 drückt, erfolgen.

Fig. 8 zeigt eine weitere Ausführungsvariante, bei der der Temperaturfühler 15, z.B. ein sogenanntes NTC-Element, durch die Wandung des Gehäuseeinsatzes 5 hindurch die Temperatur des im Ultraschalldurchflussmesser 1 befindlichen Fluids erfasst. Hierzu ist beispielsweise eine Ausformung 29 im Boden des Gehäuseeinsatzes 5 vorgesehen, in der sich der Temperaturfühler 15 befindet. Letzterer kann über eine (nicht dargestellte) Wärmeleitpaste an die Wandung des Gehäuseeinsatzes 5 thermisch angekoppelt sein. Auf diese Weise entfällt eine Bohrung im Gehäuseeinsatz 5 sowie die Abdichtung zur Innenseite hin. Ferner kann ein nicht gekapseltes NTC-Element verwendet werden, welches im Vergleich zu ersterem erheblich billiger ist.

Die Kontaktierung der Ultraschallwandlerkörper 4 bzw. 7 erfolgt bei dieser Ausgestaltung nicht über eine Metallbeschichtung der Oberfläche des Gehäuseeinsatzes 5, sondern mittels einer Elektrode 27, die aus einer dünnen Metallfolie besteht. Die Elektrode 27 ist mit der Unterseite des Ultraschallwandlerkörpers 4 bzw. 7 fest verbunden beispielsweise verklebt oder verlötet. In Fig. 8 rechte Seite ist die Elektrode zum besseren Verständnis der gesamten Form derselben losgelöst dargestellt. Als Material für die Elektrode 27 kann beispielsweise Edelstahl (VA) oder Kupfer (Cu) vorgesehen sein, welches je nach Weiterbearbeitung mit einer dünnen Edelmetallschicht (z.B. Gold oder Silber) überzogen sein kann. Die an die Elektrode 27 angeformte Anschlussfahne 28 ist vorzugsweise direkt mit der Platine 10 verlötet. Die Anschlussfahne 28 beinhaltet Knicke, die eine nachteilige Kraftübertragung aufgrund Wärmeausdehnung auf die Elektrode 27 verhindern sollen.

Alternativ zu einer festen Verbindung der Elektrode mit dem jeweiligen Ultraschallwandlerkörper 4, 7 kann aufgrund der erfindungsgemäßen Konstruktion in einfacher Weise auch eine lose Anordnung unter Zwischenschaltung einer akustischen Koppelschicht z. B. eines Koppelgels, einer Koppelpaste oder dgl. vorgesehen sein. Hierbei können der jeweilige Ultraschallwandlerkörper 4 bzw. 7 sowie die Elektrode 27 allein durch die Druckkraft der Feder 9 in Position gehalten werden und die elektrische Kontaktierung sichergestellt werden.

Die Anschlussfahne 28 wird zur Vermeidung von unerwünschten elektrischen Kontakten zur Mantelfläche der Piezokeramikscheibe in einem radialen Abstand zum Außendurchmesser der Elektrode 27 umgebogen. Aus diesem Grund ist im Bereich der Fläche 23 eine Ausformung oder Vertiefung 26 vorgesehen. Diese sichert gleichzeitig eine eindeutige Ausrichtung der Elektrode 27 einschließlich Anschlussfahne 28 zu der korrespondierenden Lötbohrung 36 in der Platine 10.

Die Kontaktierung (Signalkontaktierung) erfolgt über die Feder 9, die entweder direkt mit der Platine 10 verlötet ist oder mit einer dort befindlichen Leiterbahn kontaktiert. Für letzteren Fall ist ein Halteteil 24 zur Positionierung der Feder 9 vorgesehen.

### BEZUGSZEICHENLISTE

- 1: Durchflussmesser
- 2: Gehäuse
- 3: Messeinsatz
- 4: Ultraschallwandlerkörper
- 5: Gehäuseeinsatz
- 6: Auflagefläche
- 7: Ultraschallwandlerkörper
- 8: Feder
- 9: Feder
- 10: Platine
- 11: Vergussmasse
- 12: Modul
- 13: Dichtungselement
- 14: Zapfen
- 15: Temperaturfühler
- 16: Gehäuseöffnung
- 17: Stufe
- 18: Fläche
- 19: Gehäuseinnenwand
- 20: Durchtrittsöffnung
- 21: Dom
- 22: Bohrung
- 23: Fläche
- 24: Halteteil
- 25: Versteifungsrippe
- 26: Vertiefung
- 27: Elektrode
- 28: Anschlussfahne
- 29: Ausformung
- 30: Umlenkspiegel
- 31: Umlenkspiegelhalter
- 32: Rahmen
- 33: Bohrung
- 34: Bohrung
- 35: Dichtungselement
- 36: Lötbohrung

## Patentansprüche

1. Ultraschall-Durchflussmesser umfassend eine Gehäuseanordnung mit
einem einteiligen Gehäuse (2), welches dazu vorgesehen ist, an eine Fluidleitung angeschlossen zu werden,
mindestens zwei Ultraschallwandlern, welche jeweils einen Ultraschallwandlerkörper (4, 7) aufweisen,
und einem in das Gehäuse (2) eingesetzten, die Messstrecke und Umlenkeinrichtungen umfassenden Messeinsatz (3),
wobei das Gehäuse (2) als einstückiges Rohr ausgebildet ist, so dass der Messeinsatz (3) von der Stirnseite des Gehäuses (2) her einsetzbar ist,
**gekennzeichnet durch**
eine in dem Gehäuse (2) vorgesehene Gehäuseöffnung (16), in die ein Gehäuseeinsatz (5) eingesetzt ist, der die mindestens zwei, voneinander getrennt positionierten Ultraschallwandlerkörper (4, 7) aufnimmt,
wobei der Gehäuseeinsatz (5) über ein den im Gehäuseeinsatz (5) positionierten Ultraschallwandlerkörpern (4, 7) gemeinsames Dichtungselement (13), welches zwischen dem Gehäuse (2) und dem Gehäuseeinsatz (5) angeordnet ist, mit dem Gehäuse (2) in Verbindung steht,
und der Gehäuseeinsatz (5) jeweils im Bereich der Ultraschallwandlerkörper (4,7) topfförmig und bodenseitig geschlossen ausgebildet ist.

2. Ultraschall-Durchflussmesser nach Anspruch 1
**dadurch gekennzeichnet, dass**
der Gehäuseeinsatz (5) je eine Auflagefläche (6) aufweist, an deren Oberseite der jeweilige Ultraschallwandlerkörper (4, 7) positionierbar ist.

3. Ultraschall-Durchflussmesser nach Anspruch 1 oder 2,
**dadurch gekennzeichnet, dass**
der Gehäuseeinsatz (5) Zentriermittel für den in das Gehäuse (2) einzusetzenden Messeinsatz (3) aufweist.

4. Ultraschall-Durchflussmesser nach mindestens einem der vorhergehenden Ansprüche,
**dadurch gekennzeichnet, dass**
als Dichtungselement (13) ein entlang des Umfangs des Gehäuseeinsatzes (5) umlaufender Dichtungskörper vorgesehen ist.

5. Ultraschall-Durchflussmesser nach mindestens einem der vorhergehenden Ansprüche,
**dadurch gekennzeichnet, dass**
die zur Innenseite des Gehäuses (2) hin orientierte Unterseite des Gehäuseeinsatzes (5) gewölbt ausgebildet ist.

6. Ultraschall-Durchflussmesser nach mindestens einem der Ansprüche 1 bis 4,
**dadurch gekennzeichnet, dass**
das Gehäuse (2) im Bereich der Gehäuseöffnung (16) eine gewölbte Gehäuseinnenwand (19) aufweist, die an den Positionen der Ultraschallwandlerkörper (4, 7) Durchtrittsöffnungen (20) aufweist.

7. Ultraschall-Durchflussmesser nach mindestens einem der vorhergehenden Ansprüche,
**dadurch gekennzeichnet, dass**
an der Oberseite des Gehäuseeinsatzes (5) ein gemeinsamer Deckel, vorzugsweise eine Platine (10), vorgesehen ist.

8. Ultraschall-Durchflussmesser nach mindestens einem der vorhergehenden Ansprüche,
**dadurch gekennzeichnet, dass**
die Kontaktierung der Ultraschallwandlerkörper (4, 7) mittels Kontaktfedern (8, 9) erfolgt.

9. Ultraschall-Durchflussmesser nach mindestens einem der vorhergehenden Ansprüche,
**dadurch gekennzeichnet, dass**
der Gehäuseeinsatz (5) einen Wandungsbereich im Boden desselben, vorzugsweise eine Ausformung (29), für einen Temperaturfühler (15) aufweist, der sich im montierten Zustand an der Innenseite des Wandungsbereichs bzw. der Ausformung (29) befindet und eine Temperaturerfassung durch die Wandung des Gehäuseeinsatzes (5) hindurch vornimmt,
wobei der Temperaturfühler (15) vorzugsweise direkt an der Platine (10) befestigt, insbesondere angelötet, ist.

10. Ultraschall-Durchflussmesser nach mindestens einem der vorhergehenden Ansprüche,
**dadurch gekennzeichnet, dass**
zwischen dem Deckel und dem Boden des Gehäuseeinsatzes (5) sich Vergussmasse (11) befindet.

11. Ultraschall-Durchflussmesser nach mindestens einem der vorhergehenden Ansprüche,
**dadurch gekennzeichnet, dass**
die Innenseite des Gehäuseeinsatzes (5), insbesondere bereichsweise, vorzugsweise mit einer elektrisch leitfähigen Schicht beschichtet ist.

12. Ultraschall-Durchflussmesser nach mindestens einem der Ansprüche 1 bis 10,
**dadurch gekennzeichnet, dass**
die Kontaktierung der Ultraschallwandlerkörper (4,7) über eine flächige Elektrode (27) erfolgt, die sich zwischen dem jeweiligen Ultraschallwandlerkörper (4, 7) und dem Gehäuseeinsatz (5) befindet, wobei die Elektrode (27) vorzugsweise eine Anschlussfahne (28) aufweist und die Anschlussfahne (28) bevorzugt mindestens einen Knick aufweist.

13. Ultraschall-Durchflussmesser nach Anspruch 12,
**dadurch gekennzeichnet, dass**
im Bereich des Gehäuseeinsatzes (5) eine Ausformung oder Vertiefung (26) vorgesehen ist, die bei korrekter Montageposition den Fußbereich der Anschlussfahne (28) aufnimmt und diese lagejustiert.

## Claims

1. Ultrasound flow meter housing arrangement comprising:
a unipartite comprising a housing (2) provided to be connected to a fluid line,
at least two ultrasonic transducers having in each case an ultrasonic transducer body (4, 7),
and a measuring insert (3) which is inserted into the housing (2) and comprises the measuring distance and deflection devices,
wherein the housing (2) is configured as a single-piece pipe such that the measuring insert (3) can be inserted from the front end of the housing (2), **characterized by**
a housing opening (16) provided in the housing (2), into which a housing insert (5) is inserted which receives the at least two ultrasonic transducer bodies (4, 7) which are positioned separately,
wherein the housing insert (5) is connected to the housing (2) via a sealing element (13) which is common to the ultrasonic transducer bodies (4, 7) which are positioned in the housing insert (5) and which is arranged between the housing (2) and the housing insert (5) ,
and the housing insert (5) is cup-shaped and closed on the bottom side in each case in the region of the ultrasonic transducer bodies (4, 7).

2. Ultrasound flow meter according to Claim 1,
**characterized in that**
the housing insert (5) has in each case one supporting surface (6) on whose upper side the respective ultrasonic transducer body (4, 7) can be positioned.

3. Ultrasound flow meter according to Claim 1 or 2,
**characterized in that**
the housing insert (5) has centring means for the measuring insert (3) to be inserted into the housing (2).

4. Ultrasound flow meter according to at least one of the preceding claims,
**characterized in that**
a sealing body which is circumferential along the circumference of the housing insert (5) is provided as sealing element (13).

5. Ultrasound flow meter according to at least one of the preceding claims,
**characterized in that**
the underside of the housing insert (5) oriented towards the inside of the housing (2) is curved.

6. Ultrasound flow meter according to at least one of Claims 1 to 4,
**characterized in that**
the housing (2) has a curved housing internal wall (19) in the region of the housing opening (16), which housing internal wall (19) has through-openings (20) at the positions of the ultrasonic transducer bodies (4, 7).

7. Ultrasound flow meter according to at least one of the preceding claims,
**characterized in that**
a common cover, preferably a printed circuit board (10) is provided on the upper side of the housing insert (5).

8. Ultrasound flow meter according to at least one of the preceding claims,
**characterized in that**
contacting of the ultrasonic transducer bodies (4, 7) is effected by means of contact springs (8, 9).

9. Ultrasound flow meter according to at least one of the preceding claims,
**characterized in that**
the housing insert (5) has a wall region in its bottom, preferably a curved formation (29), for a temperature sensor (15) which is located, in the mounted state, on the inside of the wall region or the curved formation (29) and detects the temperature through the wall of the housing insert (5), wherein the temperature sensor (15) is preferably attached directly to the printed circuit board (10), in particular soldered to it.

10. Ultrasound flow meter according to at least one of the preceding claims,
**characterized in that**
potting compound (11) is located between the cover and the bottom of the housing insert (5).

11. Ultrasound flow meter according to at least one of the preceding claims,
**characterized in that**
the inside of the housing insert (5) is coated, in particular regionally, preferably with an electrically conductive layer.

12. Ultrasound flow meter according to at least one of Claims 1 to 10,
**characterized in that**
contacting of the ultrasonic transducer bodies (4, 7) is effected via a two-dimensional electrode (27) which is located between the respective ultrasonic transducer body (4, 7) and the housing insert (5), wherein the electrode (27) preferably has a connecting tab (28) and the connecting tab (28) preferably has at least one fold.

13. Ultrasound flow meter according to Claim 12,
**characterized in that**
a curved formation or depression (26) is provided in the region of the housing insert (5), which curved formation or depression (26) receives, if the mounting position is correct, the foot region of the connecting tab (28) and adjusts it in terms of location.

## Revendications

1. Débitmètre à ultrasons comprenant un agencement de boîtier avec
un boîtier d'une seule pièce (2) qui est prévu pour être raccordé à une conduite fluidique,
au moins deux convertisseurs d'ultrasons qui présentent chacun un corps de convertisseur d'ultrasons (4, 7),
et un insert de mesure (3) inséré dans le boîtier (2), comprenant la section de mesure et des dispositifs de déviation,
le boîtier (2) étant réalisé sous forme de tube d'une seule pièce de telle sorte que l'insert de mesure (3) puisse être inséré depuis le côté frontal du boîtier (2),
**caractérisé par**
une ouverture de boîtier (16) prévue dans le boîtier (2), dans laquelle est inséré un insert de boîtier (5) qui reçoit les au moins deux corps de convertisseurs d'ultrasons (4, 7) positionnés de manière séparée les uns des autres,
l'insert de boîtier (5) étant en liaison avec le boîtier (2), par le biais d'un élément d'étanchéité (13) commun aux corps de convertisseurs d'ultrasons (4, 7) positionnés dans l'insert de boîtier (5), lequel est disposé entre le boîtier (2) et l'insert de boîtier (5),
et l'insert de boîtier (5) étant réalisé à chaque fois dans la région des corps de convertisseurs d'ultrasons (4, 7) sous forme fermée en forme de pot est du coté du fond.

2. Débitmètre à ultrasons selon la revendication 1, **caractérisé en ce que** l'insert de boîtier (5) présente à chaque fois une surface d'appui (6) au niveau du côté supérieur de laquelle peut être positionné le corps de convertisseur d'ultrasons respectif (4, 7).

3. Débitmètre à ultrasons selon la revendication 1 ou 2, **caractérisé en ce que** l'insert de boîtier (5) présente des moyens de centrage pour l'insert de mesure (3) devant être inséré dans le boîtier (2).

4. Débitmètre à ultrasons selon au moins l'une quelconque des revendications précédentes, **caractérisé en ce que** l'on prévoit en tant qu'élément d'étanchéité (13) un corps d'étanchéité entourant toute la périphérie de l'insert de boîtier (5).

5. Débitmètre à ultrasons selon au moins l'une quelconque des revendications précédentes, **caractérisé en ce que** le côté inférieur de l'insert de boîtier (5) orienté vers le côté intérieur du boîtier (2) est réalisé sous forme centrée.

6. Débitmètre à ultrasons selon au moins l'une quelconque des revendications 1 à 4, **caractérisé en ce que** le boîtier (2) présente dans la région de l'ouverture de boîtier (16) une paroi interne de boîtier cintrée (19) qui présente des ouvertures de passage (20) au niveau des positions des corps de convertisseurs d'ultrasons (4, 7).

7. Débitmètre à ultrasons selon au moins l'une quelconque des revendications précédentes, **caractérisé en ce qu'**un couvercle commun, de préférence une platine (10), est prévu(e) au niveau du côté supérieur de l'insert de boîtier (5).

8. Débitmètre à ultrasons selon au moins l'une quelconque des revendications précédentes, **caractérisé en ce que** le contact entre les corps de convertisseurs d'ultrasons (4, 7) est réalisé au moyen de ressorts de contact (8, 9).

9. Débitmètre à ultrasons selon au moins l'une quelconque des revendications précédentes, **caractérisé en ce que** l'insert de boîtier (5) présente une région de paroi dans son fond, de préférence une formation (29) pour un capteur de température (15) qui se trouve, dans l'état monté, au niveau du côté intérieur de la région de paroi ou de la formation (29) et qui effectue une détection de température à travers la paroi de l'insert de boîtier (5), le capteur de température (15) étant fixé, notamment brasé, de préférence directement à la platine (10).

10. Débitmètre à ultrasons selon au moins l'une quelconque des revendications précédentes, **caractérisé en ce qu'**entre le couvercle et le fond de l'insert de boîtier (5) se trouve une masse de scellement (11).

11. Débitmètre à ultrasons selon au moins l'une quelconque des revendications précédentes, **caractérisé en ce que** le côté intérieur de l'insert de boîtier (5) est revêtu notamment en partie, de préférence avec une couche électriquement conductrice.

12. Débitmètre à ultrasons selon au moins l'une quelconque des revendications 1 à 10, **caractérisé en ce que** le contact entre les corps de convertisseurs d'ultrasons (4, 7) est réalisé par le biais d'une électrode plate (27) qui se trouve entre le corps de convertisseur d'ultrasons respectif (4, 7) et l'insert de boîtier (5), l'électrode (27) présentant de préférence une languette de raccordement (28) et la languette de raccordement (28) présentant de préférence au moins une inflexion.

13. Débitmètre à ultrasons selon la revendication 12, **caractérisé en ce qu'**une formation ou un renfoncement (26) est prévu (e) dans la région de l'insert de boîtier (5), laquelle ou lequel, dans la position de montage correcte, reçoit la région de base de la languette de raccordement (28) et ajuste celle-ci en position.
